# EUROPEAN PATENT SPECIFICATION

(11) **EP 3 837 313 B1**
(45) Date of publication and mention of the grant of the patent: **17.05.2023**
(21) Application number: 19756307.5
(22) Date of filing: 14.08.2019
(51) Int. Cl.: C08L 23/16, E01C 13/08

(54) **SWELLABLE ELASTOMERIC INFILL COMPOSITION FOR ARTIFICIAL TURF**
QUELLBARE ELASTOMERE FÜLLZUSAMMENSETZUNG FÜR KUNSTRASEN
COMPOSITION DE REMPLISSAGE ÉLASTOMÈRE GONFLABLE POUR GAZON ARTIFICIEL

(30) Priority: 16.08.2018 EP 18382612
(43) Date of publication of application: 23.06.2021
(73) Proprietor: DOW GLOBAL TECHNOLOGIES LLC, Midland, MI 48674 (US)
(72) Inventor: DE JESÚS PRIETO, Miguel Alberto, 8810 Horgen (CH); ALVAREZ, Eduardo, 43006 Tarragona (ES); LÓPEZ, David, 43006 Tarragona (ES)
(74) Representative: Boult Wade Tennant LLP
(86) International application number: PCT/US2019/046472
(87) International publication number: WO 2020/037028

(56) References cited:
- EP-A1- 2 374 917
- EP-A1- 2 752 509
- EP-A1- 3 141 579
- CN-A- 106 832 536
- US-A1- 2017 081 807

## Description

### BACKGROUND

This disclosure is directed to granular infill used for artificial turf pitches, methods of manufacture, and methods of use.

CN-A-106832536 relates to a leisure landscape artificial lawn which is characterized by being prepared from linear low density polyethylene, a color master batch, a polyolefin elastomer, an antiaging agent, an antistatic agent and a macromolecular water-absorbent resin master batch.

EP-A-3,141,579 relates to an elastic infill for artificial turf that is produced by pelletization of an elastomer composition comprising a silane coupling agent and a mixture of an olefin copolymer-containing base resin and an inorganic filler wherein the silane coupling agent is present in admixture with the mixture or is grafted onto the olefin copolymer to allow cross-linking of the olefin copolymer in the presence of water.

US-A-2017/081807 relates to synthetic poured in place surfacing materials and methods of making such materials. The method comprises: preparing a substrate for receiving the surfacing; mixing rubber particles with at least one binder to form a surfacing mixture; placing the mixture over the substrate; and allowing the mixture to dry; wherein the dried mixture forms the poured in place surfacing; wherein a coating material is included with the surfacing to substantially modify the surfacing material with water retention or hydrophilic properties.

Artificial turf, also known as pitches, comprises polymer fibers such as polyethylene fibers (yarns) that mimic grass blades. The fibers are tufted to a primary backing and coated with a secondary backing to keep yarn distributed and fixed. A granular infill is spread between the fibers and over the primary backing to maintain yarn in upright position and provide shock absorption. Unlike natural grass pitches, polymer-based artificial turf systems absorb significant heat from the sun. Particularly in hot climates, the artificial turf becomes very warm and uncomfortable for users. Watering of artificial turf pitches is used today as a solution to decrease the surface temperature of the artificial turf via evaporative cooling. However, since the artificial turf yarn and infill are typically based on non-polar polymers, a significant amount of water is drained away and not accessible for cooling.

Accordingly, there remains a need in the art for infill compositions with good heat management properties, in particular that can reduce the amount of water used for heat management of artificial turf. It would further be advantageous if the infill provided improved evaporative cooling together with good shock absorption properties.

### BRIEF DESCRIPTION

A swellable infill composition, comprises 10 to 50 weight percent of a polyolefin elastomer; 5 to 20 weight percent of a hydrophobic plasticizer; 1 to 10 weight percent of a co-plasticizer having a hydrophilic-lipophilic balance value of greater than or equal to 6; 5 to 40 weight percent of an organic absorbent material; and optionally, 10 to 65 weight percent of an inorganic absorbent material; wherein weight percent is based on the total weight percent of materials present in the composition.

An artificial turf system comprises a primary backing; a plurality of turf fibers extending upwardly from a first surface of the primary turf backing; a secondary backing disposed on a second surface of the primary backing opposite the first surface; and an infill layer comprising particulates comprising the infill composition disposed between the turf fibers upon the first surface of the primary backing.

The above described and other features are exemplified by the following figures, detailed description, examples, and claims.

### BRIEF DESCRIPTION OF THE DRAWINGS

The following figures are exemplary embodiments.
FIG. 1 shows the swelling of infill probes over time during a water immersion test.
FIG. 2 shows the swelling of infill probes over time during a water immersion test.

### DETAILED DESCRIPTION

The present inventors have unexpectedly discovered granular infill compositions having improved heat management properties, in particular improved evaporative cooling. The heat management properties are obtained using a specific combination of polyolefin elastomer, at least two different plasticizers, and a water-absorbent composition in specific amounts. In a particularly advantageous feature, the improved heat management properties can be achieved together with desirable shock absorption, durability and other properties.

Thus, an aspect of the present disclosure is a swellable infill composition comprising particular amounts of a polyolefin elastomer, a hydrophobic plasticizer, a co-plasticizer having a hydrophilic-lipophilic balance value of greater than or equal to 6, an organic absorbent material, and, optionally, an inorganic absorbent material.

The polyolefin elastomer can be present in an amount of 10 to 50 weight percent (wt%), based on the total weight percent of materials present in the composition. Within this range, the polyolefin elastomer can be present in an amount of 15 to 50 wt%, or 15 to 45 wt%, or 20 to 45 wt%, or 15 to 40 wt%, or 15 to 15 wt%, or 20 to 30 wt%.

In embodiments herein, the polyolefin elastomer can be a polyolefin block copolymer. In some embodiments, the polyolefin block copolymer can be an ethylene-based elastomer, a propylene-based elastomer, or a combination thereof. In a specific embodiment, the polyolefin elastomer is an ethylene-based block copolymer elastomer. The polyolefin elastomer can be crosslinked or non-crosslinked.

The ethylene-or propylene-based elastomer can include a combination of ethylene and propylene, and can further include a comonomer, i.e., an additional polymerizable monomer other than ethylene or propylene. Examples of suitable comonomers include straight-chain or branched α-olefins of 3 to 30, preferably 3 to 20, carbon atoms, such as propylene, 1-butene, 1-pentene, 3-methyl-1-butene, 1-hexene, 4-methyl-1-pentene, 3-methyl-1-pentene, 1-octene, 1-decene, 1-dodecene, 1-tetradecene, 1-hexadecene, 1-octadecene and 1-eicosene; cycloolefins of 3 to 30, preferably 3 to 20, carbon atoms, such as cyclopentene, cycloheptene, norbornene, 5-methyl-2-norbornene, tetracyclododecene, and 2-methyl-1,4,5,8-dimethano-1,2,3,4,4a,5,8,8a-octahydronaphthalene; di- and polyolefins, such as butadiene, isoprene, 4-methyl-1,3-pentadiene, 1,3-pentadiene, 1,4-pentadiene, 1,5-hexadiene, 1,4-hexadiene, 1,3-hexadiene, 1,3-octadiene, 1,4-octadiene, 1,5-octadiene, 1,6-octadiene, 1,7-octadiene, ethylidenenorbornene, vinyl norbornene, dicyclopentadiene, 7-methyl-1,6-octadiene, 4-ethylidene-8-methyl-1,7-nonadiene, and 5,9-dimethyl-1,4,8-decatriene; and 3-phenylpropene, 4-phenylpropene, 1,2-difluoroethylene, tetrafluoroethylene, and 3,3,3-trifluoro-1-propene.

The polyolefin elastomer can be an olefin block copolymer (OBC) comprising two or more chemically distinct regions or segments ("blocks") preferably joined in a linear manner, rather than in pendent or grafted fashion. OBCs can be produced via a chain shuttling process, and are described in US 7858706, US 7608668, US 7893166, and US 7947793. OBCs are characterized by unique distributions of both polydispersity (PDI, or Mw/Mn), block length distribution, and/or block number distribution, due, in an embodiment, to the effect of the shuttling agent in combination with multiple catalysts used in their preparation. In some embodiments, the OBC can be represented by the formula (AB)ₙ where n is at least 1, preferably an integer greater than 1, such as 2, 5, 10, 20, 50, 100, or higher, "A" a hard block and "B" is a soft block or segment.

The OBCs can include various amounts of hard and soft segments. "Hard" segments are blocks of polymerized units in which ethylene or propylene is present in an amount greater than 95 wt%, or greater than 98 wt%, each based on the weight of the OBC, up to 100 wt%. The remainder can be comonomer, which can be absent in some embodiments. "Soft" segments are blocks of polymerized units including a comonomer in an amount of greater than 5 wt%, or greater than 10 wt%, or greater than 20 wt%, or greater than 40 wt%, or greater than 60 wt%, and may be up to 100 wt%, each based on the weight of the OBC. The soft segments can be present in the OBCs in an amount of 1 to 99 wt%, or 10 to 90 wt%, or 30 to 70 wt%, or 40 to 60 wt%, or 45 to 55 wt%, each based on the weight of the OBC. Conversely, the hard segments can be present in similar ranges. The weight percent of the soft segment and the hard segment can be calculated based on data obtained from differential scanning calorimetry (DSC) or nuclear magnetic resonance (NMR) spectroscopy. Such methods and calculations are disclosed in, for example, US 7608668.

### Ethylene-based elastomer

In some embodiments the polyolefin elastomer is an ethylene-based elastomer in which ethylene comprises the majority mole fraction of the polyolefin elastomer, i.e., ethylene comprises at least 50 mole percent (mol%) of the whole polymer. More preferably ethylene comprises at least 60 mol%, at least 70 mol%, or at least 80 mol%, with the substantial remainder of the whole polymer comprising at least one other comonomer that is preferably an α-olefin having 3 or more carbon atoms, for example, propylene or octene. In some embodiments, the ethylene-based elastomer can comprise 50 to 90 mol% ethylene, preferably 60 to 85 mol%, or more preferably 65 to 80 mol%.

In an embodiment, the ethylene-based elastomer is an ethylene/α-olefin block copolymer comprising polymerized ethylene and one α-olefin as the only monomer types. In a further embodiment, the α-olefin is propylene, 1-butene, 1-hexene, or 1-octene, preferably propylene or 1-octene, more preferably 1-octene.

The ethylene/α-olefin block copolymer can have a melt index (MI or I2) from 0.1 to 50 grams per 10 minutes (g/10 min), or from 0.3 to 30 g/10 min, or from 0.5 to 20 g/10 min, or from 0.5 to 10 g/10 min, each as measured according to ASTM D1238 at 190° C using a load of 2.16 kg). In some embodiments the ethylene/alpha-olefin block copolymer can have a melt index from 0.5 to 10 g/10 min, as measured according to ASTM D1238 (230°C/2.16 kg). In some embodiments the ethylene/alpha-olefin block copolymer can have a melt index from 1.0 to 15 g/10 min, as measured according to ASTM D1238 (230°C/2.16 kg). The ethylene-based elastomer can have a density of 0.860 to 0.890 grams per cubic centimeter (g/cc), or 0.860 to 0.880 g/cc as measured according to ASTM D792.

Examples of suitable ethylene-based elastomers can include INFUSE^{™} 9007, INFUSE^{™} 9010, INFUSE^{™} 9107, INFUSE^{™} 9100, INFUSE^{™} 9507, INFUSE^{™} 9500, INFUSE^{™} 9807, ENGAGE^{™} 8100, ENGAGE^{™} 8200, ENGAGE^{™} 8150, AFFINITY^{™} EG 8100G, and AFFINITY^{™} EG 8200G, all of which are commercially available from The Dow Chemical Company (Midland, MI); can also include QUEO^{™} 6800LA, QUEO^{™} 7001LA, and QUEO^{™} 8203, all of which are commercially available from Borealis (Vienna, Austria); and can also include EXACT^{™} 4053 and EXACT^{™} 4049, all of which are commercially available from ExxonMobil Chemical Company (Spring, TX).

### Propylene-Based Elastomers

In some embodiments the polyolefin elastomer is a propylene-based elastomer in which propylene comprises the majority mole fraction of the polyolefin elastomer, i.e., propylene comprises at least 50 mol% of the whole polymer. More preferably propylene comprises at least 60 mol%, at least 70 mol%, or at least 80 mol%, with the substantial remainder of the whole polymer comprising ethylene or at least one other comonomer that is an α-olefin more than 3 carbon atoms, for example, 1-hexene or 1-octene. In some embodiments, the propylene-based elastomer comprises 50 to 90 mol% propylene, preferably 60 to 85 mol% propylene, or more preferably 65 to 80 mol% propylene. When ethylene is present, the propylene-based elastomer can have from 3 to 15 mol% of ethylene, or from 5 to 14 mol% of ethylene, or 7 to 12 mol% ethylene. In some embodiments no comonomer is present in addition to the ethylene.

The propylene-based elastomer can have a melt flow rate (MF) from The ethylene/alpha-olefin block copolymer may have a melt index from 1.0 to 15 g/10 min, as measured according to ASTM D1238 at 230°C using a load of 2.16 kg. The density of the propylene-based elastomer can be of 0.860 to 0.890 grams per cubic centimeter (g/cc), or 0.860 to 0.880 g/cc, as measured according to ASTM D792.

Examples of suitable propylene-based elastomers can include VERSIFY^{™} 2000, VERSIFY^{™} 2200, VERSIFY^{™} 2300, VERSIFY^{™} 3200, and VERSIFY^{™} 3401, which are commercially available from The Dow Chemical Company (Midland, MI) or VISTAMAXX^{™} 6102FL, VISTAMAXX^{™} 3020FL, which is commercially available from ExxonMobil Chemical Co. (Spring, TX).

### Plasticizer

In addition to the polyolefin elastomer, the composition comprises a hydrophobic plasticizer. As used herein, "plasticizer" refers to a compound or a mixture of compounds that can be introduced to the compositions to impart softness or flexibility. Thus a plasticizer can be used to attenuate hardness of a given resin.

The hydrophobic plasticizer can be present in an amount of 5 to 20 wt%, based on the total weight percent of materials present in the composition. Within this range, the hydrophobic plasticizer can be present in an amount of 5 to 18 wt%, or 8 to 18 wt%, or 10 to 18 wt%, or 10 to 16 wt%, or 14 to 18 wt%.

In some embodiments, the hydrophobic plasticizer is a liquid at 25°C. In some embodiments, the hydrophobic plasticizer is a naphthenic oil, a paraffinic oil, or a combination thereof. Preferably, the hydrophobic plasticizer comprises a paraffinic oil. An example of a suitable paraffinic oil is available under the tradename SUNPAR.

In addition to the hydrophobic plasticizer, the composition further comprises a co-plasticizer. The co-plasticizer can be present in an amount of 1 to 10 wt%, based on the total weight percent of materials present in the composition. Within this range, the co-plasticizer can be present in an amount of 1 to 8 wt%, or 2 to 8 wt%, or 2 to 6 wt%, or 3 to 5 wt%. In some embodiments, the hydrophobic plasticizer and the co-plasticizer are present in a weight ratio of 1.5:1.0 to 5.0:1.0, or 2.0:1.0 to 4.5:1.0, or 2.2:1.0 to 4.2:1.0, or 2.5:1 to 4.0:1.

The co-plasticizer can be water-dispersible or water-soluble, preferably water-soluble. For example, the co-plasticizer can a hydrophilic-lipophilic balance (HLB) of greater than or equal to 6, or greater than or equal to 10, or greater than or equal to 15, or greater than or equal to 20. HLB is an empirical expression for the relationship of the hydrophilic ("water-loving") and hydrophobic ("water-hating") groups of a molecule. Although various method have been described for determining the HLB of a molecule, unless specified otherwise, as used herein HLB refers to the value obtained by Griffin's method (See Griffin WC: "Calculation of HLB Values of Non-Ionic Surfactants," Journal of the Society of Cosmetic Chemists 5 (1954): 259). According to Griffin's method: HLB = 20 ^{∗} Mₕ/M, where Mₕ is the molecular mass of the hydrophilic portion of the molecule, and M is the molecular mass of the whole molecule. This computation provides a numerical result on a scale of 0 to 20, wherein "0" is highly lipophilic/hydrophobic, and a value of "20" corresponds to a lipophobic/hydrophilic molecule. While the HLB system is particularly useful to identify surfactants for oil and water emulsification, for example, the present inventors have discovered that a combination of two plasticizers, one of high lipophilicity (low HLB value, e.g., less than 6), and one of higher hydrophilicity (high HLB values, e.g., greater than or equal to 6) can provide infill compositions with good thermal management properties.

The co-plasticizer can be a water soluble polymer, for example, including poly(vinyl alcohol) ("PVA"); poly(alkylene oxides) such as poly(ethylene glycol) ("PEG") and polypropylene glycol) ("PPG") and the like; and poly(oxyethylated polyols) such as poly(oxyethylated glycerol), poly(oxyethylated sorbitol), and poly(oxyethylated glucose), and the like. The polymers can be homopolymers or random or block copolymers and terpolymers based on the monomers of the above polymers, straight chain or branched, or substituted or unsubstituted similar to PEG.

In some embodiments, the co-plasticizer is preferably a poly((C₂₋₃alkyl)ene glycol). The poly((C₂₋₃alkyl)ene glycol)s suitable for use in the composition are polymers characterized by the general formula: HO(CRHCH₂O)ₙH, wherein R is H, methyl, or a combination thereof, and n is preferably an integer of from 4 to 455. When R is H, the materials are polymers of ethylene oxide and are commonly known as poly(ethylene oxide)s, poly(oxyethylene)s, poly(ethylene glycol)s, or "PEG." When R is methyl, these materials are polymers of propylene oxide and are commonly known as polypropylene oxide)s, poly(oxypropylene), polypropylene glycol)s, or "PPG." When R is methyl, positional isomers of these polymers can exist. In some embodiments, the co-plasticizer is preferably a poly(ethylene glycol), preferably a poly(ethylene glycol) having a number average molecular weight (MW) of 300 to 20,000 grams per mole (g/mol), for example 1,000 to 20,000 g/mol, or 1,000 to 15,000 g/mole, or 1,000 to 10,000 g/mol. Number average molecular weight of the poly(ethylene glycol) can be determined, for example, by gel permeation chromatography.

Specific examples of suitable poly(ethylene glycol) polymers can include: 3,600-4,400 MW polyethylene glycol (PEG-90, available as CARBOWAX 4000 from Dow Chemical); 4,400-4,800 MW polyethylene glycol (PEG-100, available as CARBOWAX 4600 from Dow Chemical); 7,000-9,000 MW polyethylene glycol (PEG-180, available as CARBOWAX 8000 from Dow Chemical); 100,000 MW polyethylene glycol (available as POLYOX WSR N-10 from Dow Chemical); 200,000 MW polyethylene glycol (available as POLYOX WSR N-80 from Dow Chemical); 300,000 MW polyethylene glycol (available as POLYOX WSR N-750 from Dow Chemical); 400,000 MW polyethylene glycol (available as POLYOX WSR N-3000 from Dow Chemical); 600,000 MW polyethylene glycol (available as POLYOX WSR N-205 from Dow Chemical); 900,000 MW polyethylene glycol (available as POLYOX WSR N-1105 from Dow Chemical); 1,000,000 MW polyethylene glycol (available as POLYOX WSR N-12K from Dow Chemical); 2,000,000 MW polyethylene glycol (available as POLYOX WSR N-60K from Dow Chemical); 4,000,000 MW polyethylene glycol (available as POLYOX WSR-301 from Dow Chemical); 5,000,000 MW polyethylene glycol (available as POLYOX WSR Coagulant from Dow Chemical); and, 7,000,000 MW polyethylene glycol (available as POLYOX WSR-303 from Dow Chemical).

### Organic Absorbent Material

The composition further comprises an organic absorbent material. The organic absorbent material can be present in an amount of 5 to 40 wt%, based on the total weight percent of materials present in the composition. Within this range, the organic absorbent material can be present in an amount of 8 to 38 wt%, or 9 to 37 wt%, or 10 to 36 wt%, or 10 to 3 0 wt%, or 10 to 20 wt%, or 20 to 40 wt%.

The organic absorbent material can comprise an absorbent polymer, for example, a superabsorbent polymer (SAP). A superabsorbent polymer comprises a hydrophilic network that can retain large amounts of aqueous fluid relative to the weight of the polymer particle (e.g., in a dry state, the superabsorbent polymer absorbs and retains a weight amount of water equal to or greater than its own weight). The polymer can comprise a variety of organic polymers that can react with or absorb water and swell when contacted with an aqueous fluid. Examples of such polymers include a polysaccharide, poly(C₁₋₈ alkyl (meth)acrylate)s, poly(hydroxyC₁₋₈ alkyl (meth)acrylate)s such as (2-hydroxyethyl acrylate), poly((meth)acrylamide), poly(vinyl pyrrolidine), poly(vinyl acetate), and the like. The foregoing are inclusive of copolymers, for example copolymers of (meth)acrylamide with maleic anhydride, vinyl acetate, ethylene oxide, ethylene glycol, or acrylonitrile, or a combination thereof. A combination of different polymers can be used.

Exemplary polysaccharides include starch, cellulose, xanthan gum, agar, pectin, alginic acid, tragacanth gum, pluran, gellan gum, tamarind seed gum, cardlan gum, guar gum, arabic, glucomannan, chitin, chitosan, hyaluronic acid, and combinations thereof.

In some embodiments, the superabsorbent polymer can be prepared by polymerization of a nonionic, anionic, or cationic monomers, or a combination comprising at least one of the foregoing. Polymerization to form the superabsorbent polymer can include free radical polymerization, solution polymerization, gel polymerization, emulsion polymerization, dispersion polymerization, or suspension polymerization. The polymerization can be performed in an aqueous phase, an inverse emulsion, or an inverse suspension.

Examples of nonionic monomers for preparing the superabsorbent polymer include (meth)acrylamide, C₁₋₈ alkyl-substituted (meth)acrylamides, aminoCi-s alkyl)-substituted (meth)acrylamides, vinyl alcohol, vinyl acetate, allyl alcohol, C₁₋₈ alkyl (meth)acrylates, hydroxyl C₁₋₈ alkyl (meth)acrylates such as hydroxyethyl (meth)acrylate, N-vinylformamide, N-vinylacetamide, and (meth)acrylonitrile. As used herein, "poly((meth)acrylamide)s" includes polymer comprising units derived from (meth)acrylamide, alkyl-substituted (meth)acrylamides such as N-C₁₋₈ alkyl (meth)acrylamides and N,N-di(C₁₋₈ alkyl) (meth)acrylamides, dialkylaminoalkyl-substituted (meth)acrylamides such as (N,N-di(C₁₋₈ alkyl)amino)C₁₋₈ alkyl-substituted (meth)acrylamides. Specific examples of the foregoing monomers include methacrylamide, N-methyl acrylamide, N-methyl methacrylamide, N,N-dimethyl acrylamide, N-ethyl acrylamide, N,N-diethyl acrylamide, N-cyclohexyl acrylamide, N-benzyl acrylamide, N,N-dimethylaminopropyl acrylamide, N,N-dimethylaminoethyl acrylamide, N-tert-butyl acrylamide, or a combination thereof.

Examples of anionic monomers include ethylenically-unsaturated anionic monomers having acidic groups, for example, a carboxylic group, a sulfonic group, a phosphonic group, a salt thereof, the corresponding anhydride or acyl halide, or a combination comprising at least one of the foregoing acidic groups. For example, the anionic monomer can be (meth)acrylic acid, maleic acid, maleic anhydride, fumaric acid, itaconic acid, α-chloroacrylic acid, β-cyanoacrylic acid, β -methylacrylic acid, α-phenylacrylic acid, β-acryloyloxypropionic acid, sorbic acid, α-chlorosorbic acid, 2'-methylisocrotonic acid, cinnamic acid, p-chlorocinnamic acid, β-stearyl acid, citraconic acid, mesaconic acid, glutaconic acid, aconitic acid, 2-acrylamido-2-methylpropanesulfonic acid, allyl sulfonic acid, vinyl sulfonic acid, allyl phosphonic acid, vinyl phosphonic acid, or a combination thereof.

Examples of cationic monomers include (N,N-di(C₁₋₈alkylamino)(C₁₋₈alkyl) (meth)acrylates (e.g., N,N-dimethylaminoethyl acrylate and N,N-dimethylaminoethyl methacrylate), (wherein the amino group is subsequently quaternized with, e.g., a methyl chloride), diallyldimethyl ammonium chloride, or any of the foregoing alkyl-substituted (meth)acrylamides and dialkylaminoalkyl-substituted (meth)acrylamides, such as (N,N-di(C₁₋₈alkyl)amino)C₁₋₈alkyl acrylamide, and the quaternary forms thereof such as acrylamidopropyl trimethyl ammonium chloride.

The superabsorbent polymer can comprise both cationic and anionic monomers. The cationic and anionic monomers can occur in various stoichiometric ratios, for example, a ratio of 1:1. One monomer can be present in a greater stoichiometric amount than the other monomer. Examples of amphoteric superabsorbent polymers include terpolymers of nonionic monomers, anionic monomers, and cationic monomers.

The superabsorbent polymer can optionally include a plurality of crosslinks among the polymer chains of the superabsorbent polymer. The crosslinks can be covalent and result from crosslinking the polymer chains using a crosslinker. The crosslinker can be an ethylenically-unsaturated monomer that contains, for example, two sites of ethylenic unsaturation (i.e., two ethylenically unsaturated double bonds), an ethylenically unsaturated double bond and a functional group that is reactive toward a functional group (e.g., an amide group) of the polymer chains of the superabsorbent polymer, or several functional groups that are reactive toward functional groups of the polymer chains of the superabsorbent polymer. The degree of crosslinking can be selected so as to control the amount of swelling of the superabsorbent polymer. For example, the degree of crosslinking can be used to control the amount of fluid absorption or the volume expansion of the superabsorbent polymer. Accordingly, when the polymer particles comprise a superabsorbent polymer, the degree of crosslinking can be used to control the amount of fluid absorption or the volume expansion of the polymer particles.

Exemplary crosslinkers can include a di(meth)acrylamide of a diamine such as a diacrylamide of piperazine, a C₁₋₈ alkylene bisacrylamide such as methylene bisacrylamide and ethylene bisacrylamide, an N-methylol compounds of an unsaturated amide such as N-methylol methacrylamide or N-methylol acrylamide, a (meth)acrylate esters of a di-, tri-, or tetrahydroxy compound such as ethylene glycol diacrylate, poly(ethyleneglycol) di(meth)acrylate, trimethylopropane tri(meth)acrylate, ethoxylated trimethylol tri(meth)acrylate, glycerol tri(meth)acrylate), ethoxylated glycerol tri(meth)acrylate, pentaerythritol tetra(meth)acrylate, ethoxylated pentaerythritol tetra(meth)acrylate, butanediol di(meth)acrylate), a divinyl or diallyl compound such as allyl (meth)acrylate, alkoxylated allyl(meth)acrylate, diallylamide of 2,2'-azobis(isobutyric acid), triallyl cyanurate, triallyl isocyanurate, maleic acid diallyl ester, polyallyl esters, tetraallyloxyethane, triallylamine, and tetraallylethylene diamine, a diols polyol, hydroxyallyl or acrylate compounds, and allyl esters of phosphoric acid or phosphorous acid; water soluble diacrylates such as polyethylene glycol) diacrylate (e.g., PEG 200 diacrylate or PEG 400 diacrylate). A combination comprising any of the above-described crosslinkers can also be used.

In some embodiments, the superabsorbent polymer can comprise a starch graft copolymer, a cross-linked carboxymethylcellulose derivative, a crosslinked poly(meth)acrylic acid, a salt of a crosslinked poly(meth)acrylic acid, or a combination thereof. In a specific embodiment, the superabsorbent polymer can comprise a poly(meth)acrylic acid, for example a crosslinked poly(meth)acrylic acid, preferably a crosslinked polyacrylic acid.

### Inorganic Absorbent Material

The composition can optionally further comprise an inorganic absorbent material. When present, the inorganic absorbent material can be included in the composition in an amount of 10 to 65 wt%, based on the total weight percent of materials present in the composition. Within this range, the inorganic absorbent can be present in an amount of 10 to 63 wt%, or 20 to 60 wt%, or 25 to 60 wt%, or 30 to 60 wt%, or 30 to 45 wt%, or 10 to 45 wt%. In some embodiments, the total amount of absorbent material (i.e., organic absorbent material and, when present, inorganic absorbent material) can be present such that the weight ratio of total absorbent material to the polyolefin block copolymer is 0.5:1.0 to 5.0:1.0, preferably 0.8:1 to 3.0:1.0.

When present, the inorganic absorbent material can comprise, for example, sodium bentonite, calcium bentonite, aluminum trihydroxide, barium sulfate, calcium carbonate, calcium sulfate, magnesium carbonate, magnesium trihydroxide, diatomaceous earth, dolomite, glass beads, ceramic beads, kaolin, mica, perlite, natural silica, synthetic silica, wollastonite, whiskers, or a combination thereof. In some embodiments, the inorganic absorbent comprises calcium carbonate, sodium bentonite, or a combination thereof. In a specific embodiment, the inorganic absorbent comprises sodium bentonite. In some embodiments, the inorganic absorbent comprises calcium carbonate and the calcium carbonate is preferably uncoated.

### Additives

The composition of the present disclosure can optionally further include one or more additives, such as antimicrobial agents, antioxidants (e.g., hindered phenolics such as IRGANOX 1010 or IRGANOX 1076 supplied by Ciba Geigy), antistats, biocides, dyes, flame retardants, heat stabilizers, lubricants, pigments, processing aids, ultraviolet light stabilizer, wax, and the like, or a combination thereof. Each additive can be included in the film at levels such as 0.01 to 5.0 wt% based on the total weight percent of materials present in the film.

In a specific embodiment, the swellable infill composition of the present disclosure comprises 20 to 30 wt% of the polyolefin elastomer wherein the polyolefin elastomer is an ethylene/alpha-olefin block copolymer; 10 to 16 wt% of a paraffinic oil; 3 to 5 weight percent of a poly(ethylene glycol), preferably having a molecular weight of 300 to 20,000 g/mol; 20 to 40 wt% of the organic absorbent material wherein the organic absorbent material is a crosslinked poly(acrylic acid); and 10 to 45 weight percent of the inorganic absorbent material comprising sodium bentonite, calcium carbonate, or a combination thereof. Weight percent of each composition is based on the total weight percent of materials present in the composition.

The infill composition of the present disclosure as described above can advantageously exhibit desirable swelling and evaporative cooling properties. For example, a molded sample of the composition of the present disclosure can exhibit a change in volume of 25 to 1900% after immersion in water for 48 hours. Within this range, the change in volume can be 500 to 1900%, or 500 to 800%, or 25 to 300%, or 25 to 250%, or 25 to 100%. Swelling behavior can be determined by immersing molded samples comprising the above composition in distilled water for a specified time. The molded samples can be analyzed for dimensional changes over time in order to assess change in volume of the same. Additionally, the molded samples can be weighed at specified times, and the weight compared to the dry weight of the sample to determine water absorption. This procedure is further described in the working examples below.

The composition also preferably has a density of greater than 1.0 gram/cubic centimeter, for example 1.0 to 1.5 grams/cubic centimeter. After swelling, the composition can preferably have a density 0.850 to 1.500 grams/cubic centimeter, preferably 1.000 to 1.500 grams/cubic centimeter. Densities of greater than 1.0 can be preferred when using the composition as an infill composition to avoid floating of the composition when watering an artificial turf system or during rain.

The composition can also exhibit desirable mechanical properties. For example, a molded sample comprising the composition can have a tensile strength of 2.0 to 6.0 MPa and a Shore hardness of 55 to 90. After swelling, the same molded sample comprising the composition can have a tensile strength 0.50 to 5.00 MPa, or 1.00 to 4.50 MPa, and a Shore hardness of 0.1 to 35, or 5 to 30.

The compositions of the present disclosure can be made by dispersing the organic absorbent material in the hydrophobic plasticizer. Separately, the polyolefin block copolymer can be combined with the co-plasticizer, and the inorganic absorbent can be added to the polyolefin block copolymer/co-plasticizer mixture. The organic absorbent/hydrophobic plasticizer mixture can be added to the polyolefin block copolymer/co-plasticizer mixture, as well as any desired additives. The composition can optionally be molded, for example, compression molded.

The swellable infill composition of the present disclosure can be particularly useful as a component of an artificial turf system. Therefore another aspect of the present disclosure is an artificial turf system comprising the swellable infill composition.

The artificial turf system can comprise a primary backing, a plurality of turf fibers extending upwardly from a first surface of the primary turf backing, a secondary backing disposed on a second surface of the primary backing opposite the first surface, and an infill layer comprising particulates comprising the infill composition disposed between the turf fibers upon the first surface of the primary backing.

The primary backing can be made of one to three layers of woven or non-woven fabrics. These fabrics can be made of polypropylene, polyester or other synthetic materials. In some embodiments, the primary backing can have a two-layer structure. In some embodiments, the primary backing can have a three layer structure with the outside layers comprising a woven and fleeced material known as "FLW", and the center layer comprising a dimensionally stabilizing woven or non-woven material. The total weight of the primary backing can vary between 102 grams per square meter (3 ounces per square yard) and 407 grams per square meter (12 ounces per square yard), with the preferred total weight at 339 grams per square meter (10 ounces per square yard). The secondary backing can be a polymeric coating, which can be formed by applying a liquid polymer on the primary backing. The polymeric coating can comprise, for example, latex or urethane. The coating weight can vary between 407 grams per square meter (12 ounces per square yard) and 1017 grams per square meter (30 ounces per square yard), with 949 grams per square meter (28 ounces per square yard) being the preferred weight.

The turf fibers can comprise any suitable synthetic material which is extruded in a strip which is relatively wide and thin. The turf fibers can vary in thickness and size to give an appearance of natural grass. Typically, the turf fibers comprise one or more polyolefins, one or more nylons, or the like. A preferred material is polyethylene which is soft and has good abrasion resistance. However, polypropylene can also be used in making the turf fibers.

The particulate infill can be applied to any desired depth. In an exemplary embodiment, the particulate infill comprises greater than 10% of an average height of the turf fibers to 90% of the average height of the turf fibers. In another exemplary embodiment, the particulate infill comprises greater than 25% of an average height of the turf fibers to 75% of the average height of the turf fibers.

In some embodiments, the infill layer comprises particulates comprising the infill composition of the present disclosure in combination with one or more particulates different from the infill composition of the present disclosure. For example, the infill layer can comprise infill composition of the present disclosure and particulates comprising one or more of a styrene butadiene rubber (SBR), a thermoplastic elastomer (TPE), ethylene propylene diene monomer rubber (EPDM), poly(ethylene) (PE), and the like. Preferably, the infill layer comprises at least 10 wt% of the infill composition of the present disclosure, or at least 20 wt% of the infill composition of the present disclosure.

### EXAMPLES

Materials for the following Examples are listed in Table 1.

**Table 1**

| **Component** | **Description** | **Supplier** |
|---|---|---|
| OBC | Olefin block copolymer having a density of 0.877 g/cm³ and a melt index of 0.5 g/10 min (190°C/2.16 kg) obtained as INFUSE 9010 | The Dow Chemical Company |
| Paraffinic Oil | Hydrophobic plasticizer, obtained as Sunpar 2280 | R.E. Carroll |
| PEG | Polyethylene glycol) having a molecular weight of 3,600 to 4,400 grams per mole obtained as PEG CARBOWAX 4000 | The Dow Chemical Company |
| SAP | Polyacrylate superabsorbent polymer in the form of crosslinked polyacrylic acid, obtained as Produkt T5066F | Evonik |
| SBR | Styrene butadiene rubber having a granulometry of 0.8 to 2.0 mm determined according to ISO 13322-2:2006 | GENAN |
| CaCO₃ | Uncoated calcium carbonate obtained as Omya F-FL calcium carbonate, having a median diameter of 1.4 micrometers, 60% finer than 2 micrometers and 40% finer than 1 micrometer | Omya Inc. USA |
| Na Bentonite | Sodium bentonite | IMERYS |

Samples having an area of 1 centimeter x 1 centimeter and a 2 millimeter thickness were prepared according to the following procedure. The SAP was pre-dispersed in the paraffinic oil. In a separate batch mixer, the OBC was mixed with the PEG and then the CaCO₃ was added. The SAP-oil mixture was blended in, and the sodium bentonite was added to the resulting mixture. After mixing, the composition was compression molded to form plaques which were cut into the above dimensions.

The molded samples were initially weighed and then immersed into distilled water for the indicated time at room temperature to determine water absorption (i.e., swelling). The samples were extracted at different time intervals and analyzed for dimensional changes (measured as length, width, and thickness increase = swelling volume), relative to the initial volume (%). Water absorption was also monitored as weight increase by weighing the swelled samples.

The compositions tested are summarized in Table 2. The amount of each component is given as weight percent based on the total weight of the composition. Also shown in Table 2 for each composition is the weight ratio of the inorganic absorbent to the OBC, the organic absorbent to the OBC, and the total absorbent to the OBC.

**Table 2**

| **Component** | **CE1** | **CE2** | **CE3** | **E1** | **E2** | **E3** | **E4** | **E5** | **E6** | **E7** |
|---|---|---|---|---|---|---|---|---|---|---|
| SBR | | 100 | | | | | | | | |
| OBC | 20 | | 90 | 44 | 30 | 30 | 30 | 24 | 20 | 20 |
| CaCO₃ | 69 | | | | | 14 | 24 | 42 | | 20 |
| SAP | | | | 36 | 36 | 36 | 30 | 20 | | 10 |
| Na Bentonite | | | | | 14 | | | | 60 | 30 |
| Paraffinic Oil | 9 | | 10 | 16 | 16 | 16 | 12 | 10 | 16 | 16 |
| PEG | 2 | | | 4 | 4 | 4 | 4 | 4 | 4 | 4 |
| Total | 100 | 100 | 100 | 100 | 100 | 100 | 100 | 100 | 100 | 100 |
| Inorganic absorbent:OBC | 3.45 | N/A | 0 | 0 | 0.47 | 0.47 | 0.8 | 1.75 | 3 | 2.5 |
| Organic absorbent:OBC | 0 | N/A | 0 | 0.82 | 1.20 | 1.20 | 1 | 0.83 | 0 | 0.50 |
| Total AbsorbentOBC | 3.45 | N/A | 0 | 0.82 | 1.67 | 1.67 | 1.80 | 2.58 | 3 | 3 |

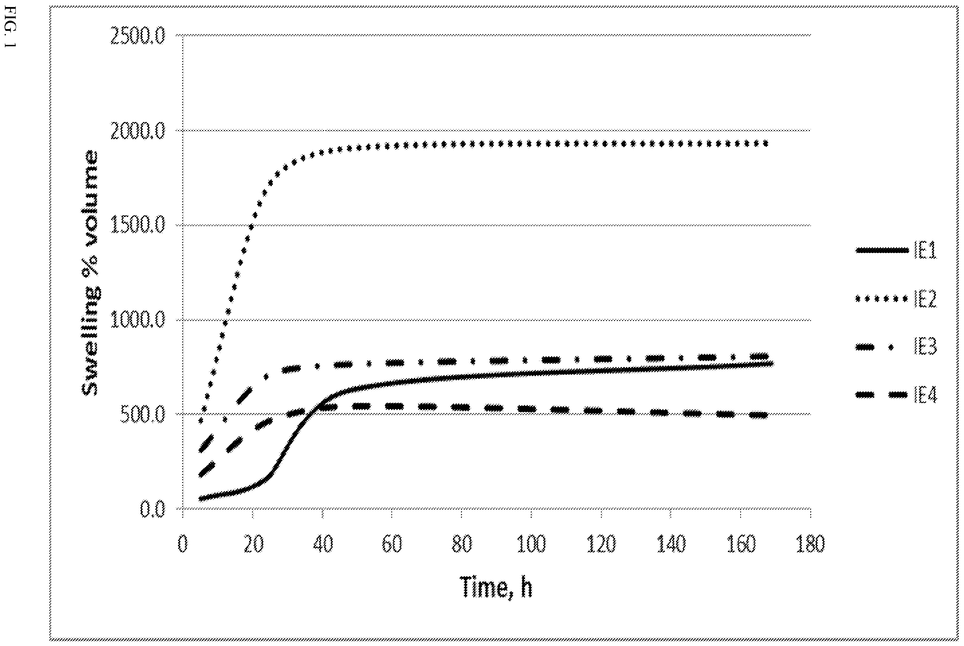

FIG. 1 shows the relative change in volume of the compositions of E1-E4 during the immersion test described above. FIG. 1 illustrates that the composition can be tailored such that the amount of swelling and the swelling rate can be controlled. Notably, after 48 hours, E1 showed a 628% volume increase (550% weight increase) due to swelling with water. When a mineral absorbent (e.g., sodium bentonite) was added in combination with the organic SAP, as in E2, the stationary amounts of swelling could be increased. Stated another way, the maximum absorption capacity of the composition was higher. When calcium carbonate was added, as in E3, the swelling rate could also be modified, for example compared to E1. E4 shows that different ratios between the components can deliver specific swelling and swelling rate performance.

In all formulations shown in FIG. 1, the relative dimensional change after immersion in water was significant, ranging from 500 to 1900% change in volume after 48 hours, as shown in Table 3.

**Table 3**

| Swelling after 48 hours | CE1 | E1 | E2 | E3 | E4 |
|---|---|---|---|---|---|
| Volume percent | | 628.1 | 1908.3 | 766.8 | 543.7 |
| Weight percent | 1.0* | 550.5 | 1579.5 | 582.5 | 387.5 |

| | | | | | |
|---|---|---|---|---|---|
| * 1% water absorption measured after 23.5 hours of immersion. No measurement was taken at 47 hours due to no absorption observed. | | | | | |

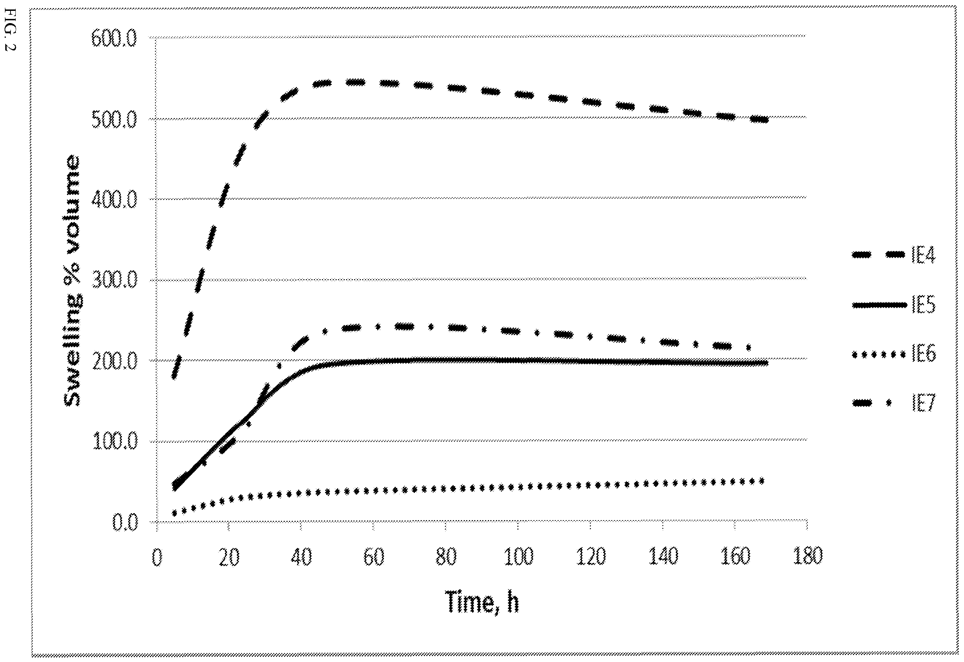

FIG. 2 and Table 4 show that the compositions can be modified to also adjust the swelling effect to keep a desired dimensional change. In addition, the compositions shown in FIG. 2 include lower amounts of polymer, which can be advantageous due to low cost.

**Table 4**

| Swelling after 48 hours | E4 | E5 | E6 | E7 |
|---|---|---|---|---|
| Volume percent | 543.7 | 195.1 | 36.4 | 237.1 |
| Weight percent | 387.5 | 137.9 | 28.7 | 149.6 |

Additional properties typically considered for infill compositions were also measured before and after 48 hours of swelling in water. The results are shown in Table 5, and show that the composition can be tuned to achieve the desired mechanical properties together with the desired swelling performance. Maximum tensile strength, tensile strain and strength at break, and tensile stress at break were determined in accordance with ISO 37 (2012).

**Table 5**

| Initial Properties | | | | | | | | |
|---|---|---|---|---|---|---|---|---|
| | Unit | E1 | E2 | E3 | E4 | E5 | E6 | E7 |
| Density | g/cc | 1.033 | 1.152 | 1.153 | 1.209 | 1.197 | 1.392 | 1.372 |
| Hardness | Shore | 62.9 | 69.1 | 67.6 | 67.8 | 71.7 | 84.9 | 71.5 |
| Max. Tens. Strength | MPa | 5.08 | 2.66 | 2.1 | 2.56 | 5.09 | 3.24 | 2.07 |
| Tens. Strain at brk | % | 974 | 847 | 755 | 770 | 835 | 88 | 751 |
| Tens. Stress at brk | MPa | 5.02 | 2.6 | 2.03 | 2.47 | 5.05 | 2.85 | 1.92 |
| Thickness | mm | 1.931 | 1.867 | 1.807 | 1.831 | 1.814 | 1.884 | 1.838 |

| Properties After 48 hours swelling | | | | | | | | |
|---|---|---|---|---|---|---|---|---|
| | Unit | E1 | E2 | E3 | E4 | E5 | E6 | E7 |
| Density | g/cc | 0.924 | 0.96 | 0.891 | 0.889 | 0.926 | 1.216 | 1.009 |
| Hardness | Shore | 19 | 0.1 | 8.6 | 15.1 | 28.1 | 27.4 | 12.5 |
| Max. Tens. Strength | MPa | 1.44 | 0.52 | 0.93 | 1.41 | 3.93 | 2.23 | 1.37 |
| Tens. Strain at brk | % | 290 | 0 | 249 | 325 | 515 | 647 | 459 |
| Tens. Stress at brk | MPa | 1.41 | 0 | 0.9 | 1.38 | 3.9 | 2.13 | 1.27 |
| Thickness | mm | 1.781 | 2.848 | 2.372 | 1.972 | 1.748 | 1.489 | 1.683 |

It can be particularly advantageous for the composition to maintain a density of greater than 1 g/cc. For example, the composition of E7 retained a density of greater than 1 g/cc and showed good mechanical properties and swelling performance of 243 vol% after 48 hours.

Samples having the compositions of CE2, CE3, E2, and E5 (as described above in Table 2) were also subjected to heat testing. The heat tests were performed based on FIFA test method 14: "Procedure for the determination of heat on artificial turf products" in the FIFA Handbook of Test Methods, October 2015 Edition. During this test, a chamber compliant with EN60068-2-5 was used to simulate solar irradiance, temperature, and humidity. The test conditions were as follows: the exposure time was 8 hours; the samples were exposed together (i.e., using the same weathering cycles), each with a separate sensor for surface temperature measurement; the infill compositions were put on a standard turf carpet and the fibers were cut to avoid and showing effect over the granules. Two sets of tests were run. The first started on dry conditions and exposed the samples directly to heat lamps. The second test pre-watered the samples with 2 L/m² of water and then exposed the samples to the heat lamps.

The results in both series of tests (i.e., dry and wet) are shown in Tables 6 and 7, respectively, which show the temperature of the surface at different exposure times. It can be seen that the compositions according to the present disclosure provided significant temperature reduction as compared to the comparative formulation of CE2. Temperature reductions were as high as 18°C at the end of the dry test, and as high as 25°C at the end of the wet test, with more than 30°C change in temperature at 3 hours after the watering step.

**Table 6**

| | Temperature of the surface (°C) | | | |
|---|---|---|---|---|
| Time (hours) | CE2 | CE3 | E2 | E5 |
| 3 | 77.1 | 61.5 | 65.2 | 57.3 |
| 4 | 72.9 | 57.5 | 61.1 | 53 |
| 5 | 74.2 | 58.7 | 63.1 | 54.7 |
| 6 | 74.1 | 59.1 | 62.4 | 54.9 |
| 7 | 76.7 | 60.8 | 64.7 | 56.5 |
| 8 | 79.7 | 64.3 | 68.4 | 60.1 |

**Table 7**

| | Temperature of the surface (°C) | | | |
|---|---|---|---|---|
| Time (hours) | CE2 | CE3 | E2 | E5 |
| 3 | 72.4 | 54.8 | 48.2 | 40.3 |
| 4 | 72.9 | 45.5 | 50.4 | 43.3 |
| 5 | 75 | 58 | 54.8 | 46.5 |
| 6 | 76.2 | 59.3 | 61.8 | 50.4 |
| 7 | 78.5 | 62.4 | 65.4 | 54.8 |
| 8 | 76.2 | 59.6 | 63.3 | 51.9 |

Unless specified to the contrary herein, all test standards are the most recent standard in effect as of the filing date of this application, or, if priority is claimed, the filing date of the earliest priority application in which the test standard appears.

## Claims

1. A swellable infill composition, comprising:
10 to 50 weight percent of a polyolefin elastomer;
5 to 20 weight percent of a hydrophobic plasticizer;
1 to 10 weight percent of a co-plasticizer having a hydrophilic-lipophilic balance value of greater than or equal to 6 as determined using the method defined in the description;
5 to 40 weight percent of an organic absorbent material; and
optionally, 10 to 65 weight percent of an inorganic absorbent material;
wherein weight percent is based on the total weight percent of materials present in the composition.

2. The swellable infill composition of claim 1, wherein the weight ratio of hydrophobic plasticizer to co-plasticizer is from 1.5:1.0 to 5.0:1.0.

3. The swellable infill composition of claim 1 or 2, wherein the polyolefin elastomer is a polyolefin block copolymer, preferably wherein the polyolefin block copolymer is a propylene-based elastomer, an ethylene-based elastomer, or a combination thereof, more preferably wherein the polyolefin block copolymer is an ethylene-based elastomer.

4. The swellable infill composition of any one or more of claims 1 to 3, wherein the polyolefin elastomer is an ethylene/alpha-olefin block copolymer; preferably an ethylene/alpha-olefin block copolymer that has a melt index of 0.1 to 50.0 grams eluted per 10 minutes, as determined according to ASTM D1238 at 190°C using a 2.16 kilogram load.

5. The swellable infill composition of any one or more of claims 1 to 4, wherein the hydrophobic plasticizer is a liquid at 25°C, preferably wherein the hydrophobic plasticizer is a naphthenic oil or a paraffinic oil.

6. The swellable infill composition of any one or more of claims 1 to 5, wherein the hydrophobic plasticizer is a paraffinic oil.

7. The swellable infill composition of any one or more of claims 1 to 6, wherein the co-plasticizer is a poly(vinyl alcohol), poly((C₂₋₃alkyl)ene glycol), poly(oxyethylated polyol), or a combination thereof, preferably a poly((C₂₋₃alkyl)ene glycol).

8. The swellable infill composition of any one or more of claims 1 to 7, wherein the co-plasticizer is a poly(ethylene glycol), preferably having a molecular weight of 300 to 20,000 grams per mole.

9. The swellable infill composition of any one or more of claims 1 to 8, wherein the organic absorbent material comprises a superabsorbent organic polymer.

10. The swellable infill composition of claim 9, wherein the superabsorbent organic polymer comprises a starch graft copolymer, a cross-linked carboxymethylcellulose derivative, a crosslinked poly(meth)acrylic acid, a salt of a crosslinked poly(meth)acrylic acid, a polymer derived from at least one of a (meth)acrylamide, C₁₋₈ alkyl-substituted (meth)acrylamides amino(C₁₋₈ alkyl)-substituted (meth)acrylamides, vinyl alcohol, vinyl acetate, allyl alcohol, C₁₋₈ alkyl (meth)acrylates, hydroxyl C₁₋₈ alkyl (meth)acrylates N-vinylformamide, N-vinylacetamide, and (meth)acrylonitrile, a copolymer of the foregoing with maleic anhydride, vinyl acetate, ethylene oxide, ethylene glycol, or acrylonitrile, or a combination thereof, a polymer derived from at least one of meth)acrylic acid, ethacrylic acid, maleic acid, maleic anhydride, fumaric acid, itaconic acid, α-chloroacrylic acid, β-cyanoacrylic acid, β -methylacrylic acid, α-phenylacrylic acid, β-acryloyloxypropionic acid, sorbic acid, α-chlorosorbic acid, 2'-methylisocrotonic acid, cinnamic acid, p-chlorocinnamic acid, β-stearyl acid, citraconic acid, mesaconic acid, glutaconic acid, aconitic acid, 2-acrylamido-2-methylpropanesulfonic acid, allyl sulfonic acid, vinyl sulfonic acid, allyl phosphonic acid, vinyl phosphonic acid, or a combination thereof, a polymer derived from an N,N-di(C₁₋₈alkylamino)(C₁₋₈alkyl) (meth)acrylate wherein the amino group is subsequently quaternized, allyldimethyl ammonium chloride, or a combination thereof.

11. The swellable infill composition of claim 9, wherein the superabsorbent organic polymer comprises a crosslinked poly(meth)acrylic acid.

12. The swellable infill composition of any one or more of claims 1 to 11, wherein the inorganic absorbent material is present, and comprises sodium bentonite, calcium bentonite, aluminum trihydroxide, barium sulfate, calcium carbonate, calcium sulfate, magnesium carbonate, magnesium trihydroxide, diatomaceous earth, dolomite, glass beads, ceramic beads, kaolin, mica, perlite, natural silica, synthetic silica, wollastonite, whiskers, or a combination thereof.

13. The swellable infill composition of any one or more of claims 1 to 12, further comprising an additive, wherein the additive is an antimicrobial agent, antioxidant, antistat, biocide, dye, flame retardant, heat stabilizer, lubricant, pigment, processing aid, ultraviolet light stabilizer, wax, or a combination thereof.

14. The swellable infill composition of any one or more of claims 1 to 13, comprising:
20 to 30 weight percent of an ethylene/alpha-olefin block copolymer;
10 to 16 weight percent of a paraffinic oil;
3 to 5 weight percent of a poly(ethylene glycol);
20 to 40 weight percent of a crosslinked poly(acrylic acid); and
10 to 45 weight percent of sodium bentonite, calcium carbonate, or a combination thereof;
wherein weight percent is based on the total weight percent of materials present in the composition.

15. An artificial turf system comprising:
a primary backing;
a plurality of turf fibers extending upwardly from a first surface of the primary turf backing;
a secondary backing disposed on a second surface of the primary backing opposite the first surface; and
an infill layer comprising particulates comprising the infill composition of any one or more of claims 1 to 14 disposed between the turf fibers upon the first surface of the primary backing.

## Patentansprüche

1. Quellbare Füllzusammensetzung, umfassend:
zu 10 bis 50 Gewichtsprozent ein Polyolefinelastomer;
zu 5 bis 20 Gewichtsprozent hydrophoben Weichmacher;
zu 1 bis 10 Gewichtsprozent einen Co-Weichmacher mit einem Hydrophil-Lipophil-Gleichgewichtswert von mehr als oder gleich 6, wie unter Verwendung des in der Beschreibung definierten Verfahrens bestimmt;
zu 5 bis 40 Gewichtsprozent ein organisches Absorptionsmaterial; und
wahlweise zu 10 bis 65 Gewichtsprozent ein anorganisches Absorptionsmaterial;
wobei Gewichtsprozent auf dem Gesamtgewichtsprozent von in der Zusammensetzung vorhandenen Materialien beruht.

2. Quellbare Füllzusammensetzung nach Anspruch 1, wobei das Gewichtsverhältnis von hydrophobem Weichmacher zu Co-Weichmacher von 1,5:1,0 bis 5,0:1,0 beträgt.

3. Quellbare Füllzusammensetzung nach Anspruch 1 oder 2, wobei das Polyolefinelastomer ein Polyolefin-Blockcopolymer ist, wobei vorzugsweise das Polyolefin-Blockcopolymer ein propylenbasiertes Elastomer, ein ethylenbasiertes Elastomer oder eine Kombination davon ist, wobei mehr bevorzugt das Polyolefin-Blockcopolymer ein ethylenbasiertes Elastomer ist.

4. Quellbare Füllzusammensetzung nach einem oder mehreren der Ansprüche 1 bis 3, wobei das Polyolefinelastomer ein Ethylen/alpha-Olefin-Blockcopolymer ist; vorzugsweise ein Ethylen/alpha-Olefin-Blockcopolymer, das einen Schmelzindex von 0,1 bis 50,0 Gramm, eluiert pro 10 Minuten, aufweist, wie gemäß ASTM D1238 bei 190 °C unter Verwendung einer Last von 2,16 Kilogramm bestimmt.

5. Quellbare Füllzusammensetzung nach einem oder mehreren der Ansprüche 1 bis 4, wobei der hydrophobe Weichmacher eine Flüssigkeit bei 25 °C ist, wobei vorzugsweise der hydrophobe Weichmacher ein Naphthenöl oder ein Paraffinöl ist.

6. Quellbare Füllzusammensetzung nach einem oder mehreren der Ansprüche 1 bis 5, wobei der hydrophobe Weichmacher ein Paraffinöl ist.

7. Quellbare Füllzusammensetzung nach einem oder mehreren der Ansprüche 1 bis 6, wobei
der Co-Weichmacher ein Poly(vinylalkohol), Poly((C₂₋₃-alkyl)englycol), Poly(oxyethylierter Polyol) oder eine Kombination davon ist, vorzugsweise ein Poly((C₂₋₃-alkyl)englycol).

8. Quellbare Füllzusammensetzung nach einem oder mehreren der Ansprüche 1 bis 7, wobei der Co-Weichmacher ein Poly(ethylenglycol) ist, vorzugsweise mit einem Molekulargewicht von 300 bis 20.000 Gramm pro Mol.

9. Quellbare Füllzusammensetzung nach einem oder mehreren der Ansprüche 1 bis 8, wobei das organische Absorptionsmaterial ein superabsorbierendes organisches Polymer umfasst.

10. Quellbare Füllzusammensetzung nach Anspruch 9, wobei das superabsorbierende organische Polymer ein Stärkepfropfcopolymer, ein vernetztes Carboxymethylcellulosederivat, eine vernetzte Poly(meth)acrylsäure, ein Salz einer vernetzten Poly(meth)acrylsäure, ein Polymer, das von mindestens einem von einem (Meth)acrylamid, C₁₋₈-alkylsubstituierten (Meth)acrylamiden, amino(C₁₋₈-alkyl)-substituierten (Meth)acrylamiden, Vinylalkohol, Vinylacetat, Allylalkohol, C₁₋₈-Alkyl(meth)acrylaten, Hydroxyl-C₁₋₈-alkyl(meth)acrylaten, N-Vinylformamid, N-Vinylacetamid und (Meth)acrylonitril abgeleitet ist, ein Copolymer der Vorstehenden mit Maleinsäureanhydrid, Vinylacetat, Ethylenoxid, Ethylenglycol oder Acrylnitril oder einer Kombination davon, ein Polymer, das von mindestens einem von Meth)acrylsäure, Ethacrylsäure, Maleinsäure, Maleinsäureanhydrid, Fumarsäure, Itaconsäure, α-Chloracrylsäure, β-Cyanoacrylsäure, β -Methylacrylsäure, α-Phenylacrylsäure, β-Acryloyloxypropionsäure, Sorbinsäure, α-Chlorsorbinsäure, 2'-Methylisocrotonsäure, Zimtsäure, p-Chlorzimtsäure, β-Stearylsäure, Citraconsäure, Mesaconsäure, Glutaconsäure, Aconitsäure, 2-Acrylamido-2-methylpropansulfonsäure, Allylsulfonsäure, Vinylsulfonsäure, Allylphosphonsäure, Vinylphosphonsäure oder einer Kombination davon abgeleitet ist, ein Polymer, das von einem N,N-Di(C₁₋₈-alkylamino)(C₁₋₈-alkyl)(meth)acrylat, wobei die Aminogruppe nachfolgend quaternisiert wird, Allyldimethylammoniumchlorid oder einer Kombination davon abgeleitet ist, umfasst.

11. Quellbare Füllzusammensetzung nach Anspruch 9, wobei das superabsorbierende organische Polymer eine vernetzte Poly(meth)acrylsäure umfasst.

12. Quellbare Füllzusammensetzung nach einem oder mehreren der Ansprüche 1 bis 11, wobei das anorganische Absorptionsmaterial vorhanden ist und Natriumbentonit, Calciumbentonit, Aluminiumtrihydroxid, Bariumsulfat, Calciumcarbonat, Calciumsulfat, Magnesiumcarbonat, Magnesiumtrihydroxid, Kieselgur, Dolomit, Glaskügelchen, Keramikkügelchen, Kaolin, Glimmer, Perlit, natürliches Siliciumdioxid, synthetisches Siliciumdioxid, Wollastonit, Barthaare oder eine Kombination davon umfasst.

13. Quellbare Füllzusammensetzung nach einem oder mehreren der Ansprüche 1 bis 12, ferner umfassend einen Zusatzstoff, wobei der Zusatzstoff ein antimikrobielles Mittel, Antioxidationsmittel, antistatisches Mittel, Biozid, Farbstoff, Flammschutzmittel, Wärmestabilisator, Schmiermittel, Pigment, Verarbeitungshilfsmittel, Ultraviolettlichtstabilisierungsmittel, Wachs oder eine Kombination davon ist.

14. Quellbare Füllzusammensetzung nach einem oder mehreren der Ansprüche 1 bis 13, umfassend:
zu 20 bis 30 Gewichtsprozent ein Ethylen/alpha-Olefin-Blockcopolymer,
zu 10 bis 16 Gewichtsprozent ein Paraffinöl;
zu 3 bis 5 Gewichtsprozent ein Poly(ethylenglycol);
zu 20 bis 40 Gewichtsprozent eine vernetzte Poly(acrylsäure); und
zu 10 bis 45 Gewichtsprozent Natriumbentonit, Calciumcarbonat oder eine Kombination davon,
wobei Gewichtsprozent auf dem Gesamtgewichtsprozent von in der Zusammensetzung vorhandenen Materialien beruht.

15. Kunstrasensystem, umfassend:
eine primäre Trägerschicht;
eine Vielzahl von Rasenfasern, die sich von einer ersten Oberfläche der primären Rasenträgerschicht nach oben erstrecken;
eine sekundäre Trägerschicht, die auf einer zweiten Oberfläche der primären Trägerschicht gegenüber der ersten Oberfläche angeordnet ist; und
eine Füllschicht, die Teilchen umfasst, die die Füllzusammensetzung nach einem oder mehreren der Ansprüche 1 bis 14 umfassen, die zwischen den Rasenfasern auf der ersten Oberfläche der primären Trägerschicht angeordnet ist.

## Revendications

1. Composition de remplissage pouvant gonfler, comprenant :
10 à 50 pour cent en poids d'un élastomère polyoléfinique ;
5 à 20 pour cent en poids d'un plastifiant hydrophobe ;
1 à 10 pour cent en poids d'un co-plastifiant ayant une valeur de rapport hydro-lipophile supérieure ou égale à 6 telle que déterminée à l'aide du procédé défini dans la description ;
5 à 40 pour cent en poids d'un matériau absorbant organique ; et
facultativement, 10 à 65 pour cent en poids d'un matériau absorbant inorganique ;
le pourcentage en poids étant basé sur le pourcentage total en poids des matériaux présents dans la composition.

2. Composition de remplissage pouvant gonfler selon la revendication 1, dans laquelle le rapport pondéral du plastifiant hydrophobe au co-plastifiant va de 1,5:1,0 à 5,0:1,0.

3. Composition de remplissage pouvant gonfler selon la revendication 1 ou 2, dans laquelle l'élastomère polyoléfinique est un copolymère séquencé polyoléfinique, de préférence dans laquelle le copolymère séquencé polyoléfinique est un élastomère à base de propylène, un élastomère à base d'éthylène, ou une combinaison de ceux-ci, plus préférablement dans laquelle le copolymère séquencé polyoléfinique est un élastomère à base d'éthylène.

4. Composition de remplissage pouvant gonfler selon l'une quelconque ou plusieurs quelconques des revendications 1 à 3, dans laquelle l'élastomère polyoléfinique est un copolymère séquencé d'éthylène/alpha-oléfine ; de préférence un copolymère séquencé d'éthylène/alpha-oléfine qui a un indice de fusion de 0,1 à 50,0 grammes élués par 10 minutes, tel que déterminé selon ASTM D1238 à 190 °C à l'aide d'une charge de 2,16 kilogrammes.

5. Composition de remplissage pouvant gonfler selon l'une quelconque ou plusieurs quelconques des revendications 1 à 4, dans laquelle le plastifiant hydrophobe est un liquide à 25 °C, de préférence dans laquelle le plastifiant hydrophobe est une huile naphténique ou une huile paraffinique.

6. Composition de remplissage pouvant gonfler selon l'une quelconque ou plusieurs quelconques des revendications 1 à 5, dans laquelle le plastifiant hydrophobe est une huile paraffinique.

7. Composition de remplissage pouvant gonfler selon l'une quelconque ou plusieurs quelconques des revendications 1 à 6, dans laquelle
le co-plastifiant est un alcool polyvinylique, un poly((alkyl en C₂ à ₃)ène glycol), un poly(polyol oxyéthylé), ou une combinaison de ceux-ci, de préférence un poly((alkyle en C₂ à ₃)ène glycol).

8. Composition de remplissage pouvant gonfler selon l'une quelconque ou plusieurs quelconques des revendications 1 à 7, dans laquelle le co-plastifiant est un poly(éthylène glycol), ayant de préférence une masse moléculaire de 300 à 20 000 grammes par mole.

9. Composition de remplissage pouvant gonfler selon l'une quelconque ou plusieurs quelconques des revendications 1 à 8, dans laquelle le matériau absorbant organique comprend un polymère organique superabsorbant.

10. Composition de remplissage pouvant gonfler selon la revendication 9, dans laquelle le polymère organique superabsorbant comprend un copolymère greffé d'amidon, un dérivé de carboxyméthylcellulose réticulé, un acide poly(méth)acrylique réticulé, un sel d'un acide poly(méth)acrylique réticulé, un polymère dérivé d'au moins l'un parmi un (méth)acrylamide, (méth)acrylamides à substitution alkyle en C_{1 à 8} (méth)acrylamides à substitution amino(alkyle en C_{1 à 8}), alcool vinylique, acétate de vinyle, alcool allylique, (méth)acrylates d'alkyle en C_{1 à 8}, (méth)acrylates d'hydroxyl-alkyle en C_{1 à 8} N- vinylformamide, N-vinylacétamide, et (méth)acrylonitrile, un copolymère de ce qui précède avec de l'anhydride maléique, de l'acétate de vinyle, de l'oxyde d'éthylène, de l'éthylène glycol, ou de l'acrylonitrile, ou une combinaison de ceux-ci, un polymère dérivé d'au moins l'un parmi acide (méth)acrylique, acide éthacrylique, acide maléique, anhydride maléique, acide fumarique, acide itaconique, acide α-chloroacrylique, acide β-cyanoacrylique, acide β-méthylacrylique, acide α-phénylacrylique, acide β-acryloyloxypropionique, acide sorbique, acide α-chlorosorbique, acide 2'-méthylisocrotonique, acide cinnamique, acide p-chlorocinnamique, acide β-stéarylique, acide citraconique, acide mésaconique, acide glutaconique, acide aconitique, acide 2-acrylamido-2-méthylpropanesulfonique, acide allylsulfonique, acide vinylsulfonique, acide allylphosphonique, acide vinylphosphonique, ou une combinaison de ceux-ci, un polymère dérivé d'un (méth)acrylate de N,N-di(alkylamino en C₁ à ₈)(alkyle en C_{1 à 8}) dans lequel le groupe amino est ultérieurement quaternisé, chlorure d'allyldiméthylammonium, ou une combinaison de ceux-ci.

11. Composition de remplissage pouvant gonfler selon la revendication 9, dans laquelle le polymère organique superabsorbant comprend un acide poly(méth)acrylique réticulé.

12. Composition de remplissage pouvant gonfler selon l'une quelconque ou plusieurs quelconques des revendications 1 à 11, dans laquelle le matériau absorbant inorganique est présent, et comprend bentonite de sodium, bentonite de calcium, trihydroxyde d'aluminium, sulfate de baryum, carbonate de calcium, sulfate de calcium, carbonate de magnésium, trihydroxyde de magnésium, terre à diatomées, dolomite, billes de verre, billes de céramique, kaolin, mica, perlite, silice naturelle, silice synthétique, wollastonite, trichites, ou une combinaison de ceux-ci.

13. Composition de remplissage pouvant gonfler selon l'une quelconque ou plusieurs quelconques des revendications 1 à 12, comprenant en outre un additif, l'additif étant un agent antimicrobien, un antioxydant, un agent antistatique, un biocide, une teinture, un ignifugeant, un agent stabilisant thermique, un lubrifiant, un pigment, un auxiliaire de traitement, un stabilisant à la lumière ultraviolette, une cire, ou une combinaison de ceux-ci.

14. Composition de remplissage pouvant gonfler selon l'une quelconque ou plusieurs quelconques des revendications 1 à 13, comprenant :
20 à 30 pour cent en poids d'un copolymère séquencé d'éthylène/alpha-oléfine ;
10 à 16 pour cent en poids d'une huile paraffinique ;
3 à 5 pour cent en poids d'un poly(éthylène glycol) ;
20 à 40 pour cent en poids d'un acide poly(acrylique) réticulé ; et
10 à 45 pour cent en poids de bentonite de sodium, de carbonate de calcium, ou d'une combinaison de ceux-ci ;
le pourcentage en poids étant basé sur le pourcentage total en poids des matériaux présents dans la composition.

15. Système de gazon artificiel comprenant :
un support primaire ;
une pluralité de fibres de gazon s'étendant vers le haut à partir d'une première surface du support primaire de gazon ;
un support secondaire disposé sur une seconde surface du support primaire opposée à la première surface ; et
une couche de remplissage comprenant des matières particulaires comprenant la composition de remplissage selon l'une quelconque ou plusieurs quelconques des revendications 1 à 14 disposée entre les fibres de gazon sur la première surface du support primaire.
